# EUROPEAN PATENT APPLICATION

(11) **EP 2 030 757 A1**
(43) Date of publication of application: **04.03.2009**
(21) Application number: 07115371.2
(22) Date of filing: 31.08.2007
(51) Int. Cl.: B29C 47/08

(54) **Process for purging an extrusion apparatus.**

(71) Applicant: TOTAL PETROCHEMICALS RESEARCH FELUY, 7181 Seneffe (Feluy) (BE)
(72) Inventor: Samaras, Christophe, F-64000, Pau (FR)
(74) Representative: Leyder, Francis

(57) **Abstract**

The present invention relates to an improved process of purging an extrusion apparatus. The purging process is improved by adjusting the type of polymer material used to purge the extrusion apparatus and by adjusting the purging flow rate.

## Description

### Field of the invention

The present invention relates to a process for purging an extrusion apparatus that has been used for the processing of thermoplastic polymers.

### Background of the invention

In general, polymerization processes of polyolefins may be carried out in loop reactors. Different reactants including the olefin monomer, a light hydrocarbon diluent, a catalyst and optionally, a co-monomer and hydrogen are fed to a reactor. In the presence of a suspension of catalyst in diluent, said diluent having low solubility for the polymer, the polymer is produced in the form of solid particles, insoluble in the diluent. Slurry, consisting of the reactants and polyolefin powder, is typically collected in one or more settlings legs of the polymerization reactor and discharged continuously to a flash tank, through flash lines, where most of the light hydrocarbon diluent and unreacted monomer evaporates, yielding a dry bed of polyolefin in powder form. Catalyst will be contained in the polyolefin. The powder is discharged to a purge drier in which the remaining light hydrocarbon and co-monomer are removed. At the end of the polymerization process of polyolefins, polymer powder is transported to a finishing area where various stabilizers and additives can be incorporated. Finally it is transported to an extrusion apparatus where it is extruded, e.g. into pellets.

It is well known how important it is to regularly purge an extrusion apparatus. Purging is the process whereby the apparatus is cleaned such that contents in the extrusion apparatus remaining from a previous extrusion process, including a residual amount of polymer, optionally along with additives, degraded materials and any other undesired materials which may be present in the extrusion apparatus are eliminated from the apparatus.

Purging may be required after a shut-down of the extruder. The extruder can be shut down for planned production schedule, because the reactors are stopped or due to an interlock on the extruder or on the downstream. When the extruder is shut down, the polymer staying in the extruder continues to degrade and it is necessary to purge it before starting the extruder, i.e. to replace the product that stayed a long time in the extruder with fresh polymer.

Even if an extrusion apparatus is dedicated to running only a specific polymer all the time, purging is necessary to remove any material from previous runs adhering to the extrusion apparatus walls. If not removed, this material, subject to the heat of the extrusion process, degrades over time and can contaminate fresh polymer passing through the extrusion apparatus. The results are gels and other imperfections in the finished product.

Improved uniformity of the pellets obtained from an extrusion apparatus is directly related to the number and degree of open polymer holes in the extrusion die plate during the extrusion process. Therefore, it is important that all holes of the extrusion die are completely filled up with fresh polymer at the start of an extrusion process. The purging process has the purpose of filling all the holes of the extrusion die plate. After a long shut-down of an extrusion apparatus, liquid polymer is flowing out of the die plate and the holes may become empty. It is critical to have the holes full of polymer before the start-up of the apparatus in order to avoid that water (from e.g. an underwater pelletizer) flows in the die plate which could cause a lot of trouble including steam generation and freezing of the holes with cold polymer. In certain cases, the holes in the extrusion die can be plugged with material that is cross-linked or carbonized and need to be unplugged and filled with fresh polymer before starting up the apparatus. Purging enables to clean and unplug the holes of the extrusion die and to fill all the holes with proper quality polymer. The purpose of the purging operation is thus not only to avoid contamination of the extruded product but also to optimize the conditioning of the polymer before production begins.

Methods for purging extrusion apparatuses have been described in the art, but none have been entirely adequate. Such methods generally comprise the passage of a purging composition through a dirty extrusion apparatus. For instance, GB 981,021 describes a method for cleaning a machine that has been used for processing thermoplastic macromolecular materials at a raised temperature. The cleaning compound comprises a cross-linked polyolefin, which is passed through the apparatus after processing but while the apparatus is still hot. The machine is stripped and the adherent coating of cleaning compound is removed while it is above its softening point. US 3,776,774 describes an extrusion apparatus cleaning composition which comprises discrete, crushable particles of a highly crystalline thermoplastic extrusion polymer having a high brittle point and a thermoplastic purging polymer which has a melting point below said brittle point and which upon heating above its melting point forms a fluid-phase carrier for said particles. US 4,954,545 describes a polymeric purging composition consisting essentially of a polymer, a mild abrasive, and a sulfonated surfactant.

However, prior art purging compositions such as those mentioned above have suffered from one or more of the following disadvantages: polymer specificity, i.e. only work with certain preceding polymers, take too long to accomplish purging, become a source of contamination themselves of the succeeding polymer, are too abrasive, causing undesired wear of extrusion apparatus parts, and give off odor.

On a high-output extrusion apparatus, a purging operation entails the participation of numerous operators. The operators performing the purging have to work quickly to remove several tons of hot, sticky hot polymer which are poured out on to the ground in a relative short period. This work is not only very demanding in terms of labor and a physically arduous task, but is also dangerous. This is because the operators are constantly exposed to a risk of burns on contact with the high-temperature polymer.

In view of the above-mentioned difficulties, there remains a great need in the art for providing an improved process for purging an extrusion apparatus. The present invention aims to provide such improved purging process, which overcomes at least some of the above-mentioned disadvantages of conventional purging processes.

### Summary of the invention

According to the present invention, a purging process is provided which adequately cleans the extrusion apparatus before the start up of an extrusion process. In particular, according to the invention, the purging process is particularly improved in view of currently applied purging processes by reducing the purging flow rate and by adjusting the type of polymer material used to purge the extrusion apparatus.

In a first aspect, the present invention therefore relates to a process for purging an extrusion apparatus, said apparatus comprising a residual amount of an extrusion polyolefin polymer that has been extruded in said apparatus, comprising the steps of
- feeding an effective amount of a purging polymer to said extrusion apparatus,
- substantially reducing the purging flow rate in said extrusion apparatus, said flow rate being the amount of purging polymer that is transported through the extrusion apparatus for purging the apparatus, by substantially reducing the rotation speed of the screw in the extrusion apparatus, and
- removing said residual amount of said extrusion polymer from said extrusion apparatus by displacing said extrusion polymer by means of the purging polymer, thereby obtaining an extrusion apparatus which is substantially free of said extrusion polymer and which comprises a residual amount of said purging polymer.

The term "*extrusion polymer*" as used herein refers to a polymer that has been extruded in the extrusion apparatus and of which a residual amount remains in the extrusion apparatus after interruption of the extrusion process.

As used herein the term "*purging polymer*" refers to a polymer used to purge, i.e. clean, the extrusion apparatus. The purging polymer is passed through the extrusion apparatus preferably immediately after the passage of the processed extrusion polymer, but it is also possible to pass the purging polymer through the extrusion apparatus some time after the passage of the extrusion polymer.

The term "*purging flow* rate" refers to the amount of polymer per time unit that is transported through the extrusion apparatus and forced through the extrusion die for purging the apparatus.

The term "*substantially reducing*" refers to a reduction of the purging flow rate with at least 40 % and preferably at least 80 % and more preferably at least 90%, compared to the standard operating rate (i.e. normal production rates). Typically the purge flow rate is 40 to 60% of the standard operating flow rate. In the present invention, the purge flow rate is 2 to 20% of the standard operating flow rate.

An extrusion apparatus generally has one or more rotating screws wherein the polymer is mixed and melted, an extrusion die and means for cutting the extruded filaments into pellets. A molten state polymer is pumped under pressure, through a die, producing a continuous cross-section or profile. The pumping action is typically performed by a screw inside an extrusion apparatus or a combination of screws or with a gear pump. In particular, the present invention provides a method for reducing the purging flow rate by reducing the rotation speed of the screw(s) of the extrusion apparatus.

Technically, purging the apparatus at a reduced rate can be done by using a motor, capable of driving rotation of the screw(s) of the extrusion apparatus at reduced rotation speed. Reduction of the purging flow rate in an extrusion apparatus has several advantages. First, it enables to lower the amount of purging polymer required for purging the apparatus. Also, it enables to reduce the RPM of the extruder, which advantageously allows limiting the increase in temperature in the extrusion apparatus and allows obtaining homogenously molten polymer of a desired quality. As a result thereof, the molten polymer having a correct viscosity is fed to the extrusion die of which all holes will be advantageously filled up. This greatly improves cleaning of the extrusion die. In addition, the molten polymer strands formed at the exit of the die can be easily cut off, the die can be easily cleaned and application of oil on the die plate is facilitated. Furthermore, since the use of a purging polymer for purging an apparatus requires the installation of a feeding system to feed this purging polymer to the extruder, reducing the purging flow rate, and thus the amount of purging polymer required for the purging process also enables to use a smaller feeding system for the purging polymer. This results in the use of smaller silos and less handling. In addition, running the extrusion apparatus at a low rotation speed during purging, allows working much more safely.

In a preferred embodiment, low rotation speed of the screw in the extruder can be achieved by driving the screw by a variable speed motor or by driving the screws by an auxiliary motor, which under typical operation conditions is used to empty the extruder. The present invention thus provides another application for the auxiliary motor, i.e. use in a purging process.

In another aspect, the invention relates to a process for purging an extrusion apparatus comprising feeding a purging polymer to said apparatus which has a low melt flow index (MFI) and a high melt strength.

The term "*melt flow index (MFI)*" as used herein refers to the mass of extrudate driven through an extrusion die in a 10-minute interval. The index is an indirect measure of viscosity at specified load/temperature combinations.

The term "*melt strength*" as used herein refers to the strength of a polymer in the molten state. Generally, polymers having a high melt strength have the property of being harder in a molten state. A low MFI resin has a high viscosity and has a high melt strength. The MFI is measured at one temperature while melt strength is typically used as an indication (qualitative) of the viscosity at a given temperature.

In a preferred embodiment, the purging polymer is polypropylene having a MFI (5kg at 230°C) which is lower than 15g/10 minutes and preferably lower than 10g/10 minutes and even more preferred lower than 5g/10 minutes.

In yet another preferred embodiment, the purging polymer is HDPE having a MFI (2.16 kg at 190°C) which is lower than 10g/10 minutes and preferably lower than 5g/10 minutes and even more preferred lower than 2 g/10minutes.

The purging process is stopped at a certain time point, in particular for cleaning the die before starting an extrusion process (= start-up sequence). Stopping the purging process for cleaning the die avoids the die plate to flow. It further allows keeping the die plate clean after cutting the polymer strands. Cleaning of the die plate refers to cutting polymer strands and adding some oil, e.g. silicone oil, on the die plate. It is for this operation that it is very useful to have high melt strength material. It allows easy cleaning of the die plate, and the die holes are not dripping but stay full of polymer during a long period. When using purging polymer with low melt strength properties (for example polypropylene having a MFI higher than 50g/10minutes), the die plate continues to 'flow', and even after cutting the strands, purging polymer is still coming out of the die plate and the plate cannot be kept clean. By using purging polymers having high melt strength the apparatus can thus be interrupted for a longer period of time, which improves the cleaning process. Use of a purging polymer having a high melt strength, which has a non-sticky characteristic and chemical inertness, enables the extrusion apparatus to be easily cleaned.

In another preferred embodiment, the invention relates to a purging process comprising feeding a purging polymer which has a low melting point to said extrusion apparatus. The term *"melting point*" or "*melting temperature*" are used herein as synonyms and both refer to the temperature at which a solid polymer changes to a molten polymer. In a preferred embodiment the purging polymer has a melting temperature which is lower than 200°C and preferably lower than 160°C, and even more preferred lower than 140°C. Using a purging polymer having a low melting point in the purging method according to the present invention, has the advantage that such polymer can be used in the purging operation at lower temperatures(i.e. temperatures that are still adequate to purge the extrusion apparatus of the thermoplastic extrusion polymer) without incurring melt flow.

During the initial phase (few first seconds) of the start up sequence of an extrusion process it is critical that the die holes are not frozen (i.e. blocked). The use of low melting point purging polymer is very useful because the holes will freeze at a lower temperature, which makes it easier to maintain the holes unplugged. During the start-up of the extruder, the pelletizer chamber is closed and water is sent to the die plate. Ideally at the same moment, molten polymer is also sent to the die plate. During a short period the die plate can be underwater while the polymer is not flowing at maximum rate. During this period there is a high risk of hole freezing. This risk is greatly reduced by the use of low melting point resin: the die plate can be under water for a longer period of time before the polymer reaches a low temperature.

The present invention provides a purging process, which enables maximizing end product quality and minimizing maintenance downtime, improving the load on the operator and the safety of the operation. Purging time can be shortened and product loss considerably reduced. The product also has good thermal stability and it is possible to carry out more efficient purging. Plus, because the purging time is shorter, less purging polymer is actually used, less work time is wasted, productive machine time is increased, and fewer polymer product has to be scrapped because of gels. All this means savings in money as well as time.

Those skilled in the art will immediate recognize the many other effects and advantages of the present process and apparatus from the detailed description and accompanying drawings provided below.

### Detailed description of the figure

Fig. 1 is a schematic representation of an extrusion apparatus suitable for being purged using a method according to the present invention.
FIG. 2 is a flow chart representing the purging operation.
FIG. 3 is a flow chart illustrating the operational steps which are to be taken when starting up an extruder after a purging operation.

### Detailed description of the invention

Extrusion is one of the most used, and perhaps the most important method of plastic fabrication today. The terms "*extrusion*" and "*pelletizing*" are used herein as synonyms and refer to the process of transforming polymer powder into pellets. Extrusion processes of polyolefins are well known in the art. The commercial process of polymer extrusion is the conversion of a raw material, usually in the form of a powder or pellet, into a finished product or part by forcing it through an opening. Commonly, polyolefin polymer is fed into an extrusion apparatus, which comprises an apparatus having one or more rotating screws wherein the polymer is mixed and melted, an extrusion die and means for cutting the extruded filaments into pellets. The process consists of pumping a molten state polymer, under pressure, through a die, producing a continuous cross-section or profile. For continuous extrusion the pumping action is typically performed by a screw inside an extrusion apparatus or a combination of screws or even with a gear pump. The polymers used are typically thermoplastics and are melted by heating the apparatus. The opening in the die is the guide after which the extrudate takes its final form.

Starting up a polymer extrusion apparatus entails having previously purged the apparatus. The term "*purging"* or "*cleaning*" an extrusion apparatus as used herein refers to the process of eliminating contents in the extrusion apparatus remaining from an extrusion process, including a residual amount of polyolefin polymer, optionally along with additives, degraded materials and any other undesired materials which may be present in the extrusion apparatus. Purging of an extrusion apparatus permits to clean the apparatus, and in particular to unplug the holes of the extrusion die, before restarting a subsequent extrusion process with the same or another polymer.

### A. Reduction of the purging flow rate

In a first aspect, the present invention relates to a process for improving purging of an extrusion apparatus by substantially reducing the purging flow rate in the apparatus, in particular by reducing the rotation speed of the screw in the extrusion apparatus. It will be clear that "reducing the rotation speed" refers to the application of a rotation speed during purging which is lower than the speed that is applied during the extrusion operation. The rotation speed of the screw or screws comprised in the extrusion apparatus can thus be reduced, which reduces temperature development in the apparatus. As a result thereof, the purging polymer is melted by heating the extrusion apparatus rather than by being kneaded at an elevated speed of the rotating screw(s) in the extrusion apparatus. Reduction of temperature in the apparatus during purging is particularly beneficial to improve the purging process as it allows obtaining homogenously molten polymer of a desired quality and improves cleaning of the die, as explained above.

In a preferred embodiment, the rotation speed of the screw in the extrusion apparatus during purging is at least 5 times, preferably at least 10 times, preferably at least 20 times lower than the rotation speed of the screw in the extrusion apparatus during extrusion.

Preferably, a motor having an adjustable speed is used for driving the extrusion apparatus and for controlling the rotation speed of the screw(s) in the extrusion apparatus. In one embodiment, this motor unit may be the main motor unit that drives the extrusion apparatus during the extrusion process. In this case, the speed of this main motor can be adjusted in function of the process to perform, i.e. extrusion or purging.

In another embodiment, an auxiliary motor, which is different from the said main motor and has a lower speed and capacity than the main motor, is used for driving the extrusion apparatus during purging. An auxiliary motor is always installed for high capacity lines when the main motor has only one speed. The purpose of the auxiliary motor is to empty the machine before start-up. The present invention provides for the use of this auxiliary motor for another purpose: in particular for driving rotation of the screw(s) of the extruder at reduced speed during purging. An advantage of using an auxiliary motor is that the electrical supply to the extrusion apparatus is not perturbated, since starting 5 or 10 MW main motor is a very sudden change in the load of the supply net and by using an auxiliary motor, start-up of the main motor is not required. The auxiliary motor has also a different gear reduction ratio and the screws are rotating much slower.

In an example, the main motor may drive the extruder at a speed comprised between 150 and 500 rpm, depending on the type of screw used in the extrusion apparatus (e.g. typically 150 to 300 rpm for twin screw extruders and 250 to 500 rpm for mixer type extruders), while the auxiliary motor drives the extruder at a lower speed, preferably comprised between 3 and 50 rpm, more preferably between 3 and 25 rpm. Preferably, the rotation speed of the screw(s) in the extrusion apparatus, expressed in rpm, controlled by the auxiliary motor, is 5 times, preferably 10 times, preferably, 20 times, even preferably 50 times, lower than the rotating rate controlled by the main motor.

In another embodiment, the invention relates to a process whereby the purging polymer is fed to the extrusion apparatus at a rate which is lower than the rate for feeding extrusion polymer to said extrusion apparatus. By reducing the purging flow rate, a lower amount of purging polymer is required for purging the apparatus. The rate of molten polymer flowing out of the extruder can be easily handled by a single operator instead of three or four operators as is the case for standard purge procedures.

Depending on the rotation speed of the extruder a certain threshold amount of polymer needs to be fed to the extrusion apparatus such that the polymer does not degrade. In an example, an extruder having a capacity of 40 tons/hour running at 440 rpm with a main motor has a useful range of feeding rate comprised between 24 and 40 tons/hour. Working at rates of more than 24 tons/hour will overheat the polymer product. When this extruder is purged by action of the auxiliary motor, the extruder is running during the purging sequence at 5 rpm, which permits a useful feeding rate comprised between 0 and 1 ton/hour. A rate less than one ton/hour can easily be handled by an operator. In another example, an extruder running at 220 rpm provides a useful feeding rate comprised between 12 to 20 tons/hour. An extruder running during the purging sequence at 44 rpm with e.g. the same main motor having adjustable speed, provides a useful feeding rate comprised between 2 and 4 tons/hour.

Preferably, when using different motors for driving the extruder during extrusion and purging, a main motor having a power capacity of 3000 to 12000 KWatt and an auxiliary motor having a power capacity of 50 to 150 KWatt, are used in the respective processes.

In another embodiment the invention relates to the use of a motor having an adjustable speed for controlling the rotation speed of the screw in the extrusion apparatus during purging. Preferably, the invention relates to the use of a motor for controlling the rotation speed of the screw in the extrusion apparatus during purging, whereby said motor is different from the motor for controlling the rotation speed of the screw in the extrusion apparatus during extrusion.

### B. Purging polymer

The present invention relates in another aspect to a process for improving purging of an extrusion apparatus by adjusting the type of purging polymer. The purging polymer preferably has the following characteristics:
- a melt flow index MFI, lower than 15g/10 minutes and preferably lower than 10g/10 minutes and even more preferred lower than 5g/10 minutes, when using polypropylene as purging polymer,
- a melt flow index MFI lower than 200g/10minutes and preferably lower than 100g/10minutes, and even more preferred lower than 40 g/10min when using HDPE as purging polymer In one embodiment, the purging polymer may be the same polymer as the extrusion polymer.

In another embodiment, the purging polymer may be different from the extrusion polymer. In a preferred embodiment, purging and extrusion polymers are different and the purging polymer has a higher melt strength than the extrusion polymer. Due to its higher melt strength, the purging polymer will be harder in molten state, and thus less fluid and less tacky in the molten state than the extrusion polymer. These characteristics will considerably reduce the risk of obtaining plugged holes in the extrusion die. In another embodiment, the purging polymer has a lower melting point than said extrusion polymer. This provides the advantage that die holes will freeze and plug at a lower temperature. As a consequence, it becomes easier to maintain the holes of the die plate open.

The following table 1 provides some examples of purging polymers which are suitable for being used in combination with the indicated extrusion polymers. It is noted that the MFI measurement is not a unique measurement. For PE there are three different MFI measurements: MI2 = 2.16 kg load at 190°C, MI5 = 5 kg load at 190°C and HLMI = 21.6 kg load at 190°C. For polypropylene there usually is a MFI measurement: MFI= 5 kg load at 230°C.

**Table 1**

| **Purging polymer** | **MFI purging polymer** | **Extrusion polymer** |
|---|---|---|
| PP | MFI (5kg, 230°C) < 15g/ 10 min. | polypropylene |
| HDPE | MI2 (MFI) (2.16 kg, 190°C)< 10 g/ 10min. | polypropylene |
| LDPE | MI2 (MFI) (2.16 kg, 190°C) < 10g/ 10min. | HDPE |

In a particularly preferred embodiment, the purging polymer is polyethylene and the extrusion polymer that has been extruded in the apparatus is polypropylene. Polyethylene has a higher melt strength than polypropylene. This means that polyethylene remains relatively non-tacky and elastic above its melting point over a wide range of temperatures. Also the melting temperature of polyethylene is lower and around 120°C compared to 160°C for polypropylene.

In another embodiment the invention relates to the use of a purging polymer for purging an extrusion apparatus having a high melt strength and having a melting temperature which is lower than 200°C and preferably lower than 160° C and even more preferred lower than 140°C., whereby said purging polymer is preferably different from said extrusion polymer and has a higher melt strength and a lower melting point than said extrusion polymer.

Polyolefin polymers that may be extruded in an extrusion apparatus according to the invention or that may be used to purge the extrusion apparatus comprise but are not limited to polyolefin homo-polymers having 2-18 carbon atoms in the repeat unit, polyolefin copolymers having at least one co-monomer that has repeat units having 2-18 carbon atoms, or blends of such polymers. Examples of suitable polymers include but are not limited to low density polyethylene, middle density polyethylene, high density polyethylene, linear low density polyethylene, polypropylene, ethylene-propylene copolymers, propylene-butene copolymers, ethylene-butene-propylene terpolymers, ethylene- vinyl acetate copolymers and poly(butene-1), though not limited thereto. These are used individually or in combination of two or more. Further, it is needless to say that compounding ingredients such as anti-fusing agents, nucleating agents, anti-static agents, pigments and the like can be added properly, if necessary. In a preferred embodiment said polyolefin polymer is selected from the group comprising but not limited to polypropylene, polybutylene, polyethylene, ethylene-propylene co-polymers, propylene-butene-1-co-polymers, and blends thereof. In an even more preferred embodiment, said polyolefin polymer comprises polypropylene, polyethylene or ethylene-propylene co-polymers.

### C. Extrusion apparatus

The purging operation may take place when some of the die plate holes of the extruder are blocked (frozen) and the pellet homogeneity is not good. Then the extruder is stopped to make a purge. The extruder may also be stopped for various other reasons e.g. interruption of the polymerization reactor, need to change the knives of the pelletizer, etc... and in this case a purge is required before re-starting the extruder.

Any extrusion apparatus can be used in the invention which is capable of melting and mixing the polyolefin polymer, together with any additives and/or free radical initiators, that may be added during mixing, or upstream from the extrusion apparatus. In a preferred embodiment, the extrusion apparatus used in the process according to the invention is a screw mixer, e.g. a twin screw extruder or mixer type extruder. The extrusion apparatuses can be used with all types of commercially available thermoplastic polymers, such as for instance polyethylene, polypropylene, nylon, polyvinyl chloride, polystyrene, etc..

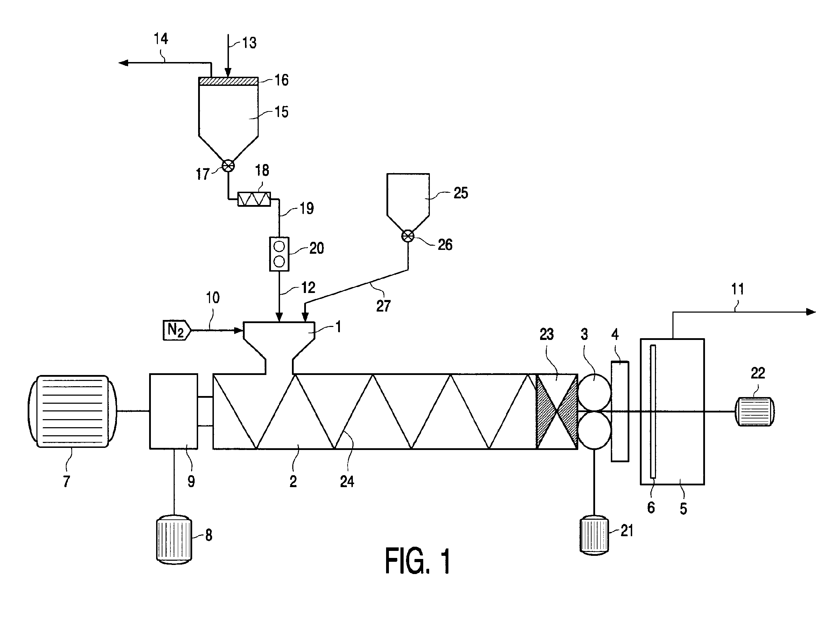

Referring to **Fig. 1** an extruding apparatus, which can be purged according to a process described in the present invention, is illustrated. The extruding apparatus preferably comprises several equipments connected in series. In a preferred embodiment, the extrusion apparatus comprises a feedhopper 1, an extrusion apparatus 2, a pump 3, a filter 4, a cutting apparatus 5, a (main) motor 7 and a gear reducer 9. Polymer powder is preferably fed to the extruding apparatus using a valve 17, preferably a rotary valve, and is conveyed, preferably by means of screws 18 and conduit 19 and 12 to the extrusion apparatus. Preferably conduit 19 is provided with a flow meter 20, preferably a powder coriolis flow meter. The rate of feeding is preferably controlled by adjusting the speed of the valve 17 and the speed of the screw 18. A nitrogen purge 10 is preferably provided in the feed hopper 1 in order to prevent air from entering the extrusion apparatus and in order to limit the degradation of the polymer.

At the end of polyolefin polymerization, preferably degassed polymer powder is transferred to containers 15, preferably by a conduit 13. In an embodiment, the containers 15 are provided with a filter 16, preferably at the top of the containers 15, for avoiding powder fines to be swept away with the conduit 14 releasing nitrogen. These filters preferably are bag filters having a nitrogen pulse-jet for cleaning. The size of the containers 15 is preferably dependent on the operation requirements. A preferred size is to have a hold-up time of 2 to 8 hours in order to allow small maintenance on the extrusion apparatus, e.g. change of the knives.

When using a purging polymer which is different from the extrusion polymer, a second polymer feeding system needs to be employed for feeding the purging polymer to the extruder. Such feeding system may comprise a container 25 containing purging polymers. The purging polymer is preferably fed to the extruding apparatus using a valve 26, preferably a rotary valve, and is conveyed, preferably by means of conduit 27 to the extrusion apparatus.

During operation, the polymer is fed into the extrusion apparatus wherein the crystalline polymer is melted to provide a uniform molten polymer material. Polyolefin is introduced in the apparatus 2 by means of a feedhopper 1, located at the upstream end of the apparatus 2. A nitrogen purge 10 is preferably provided in the feedhopper 1 in order to prevent air from entering the extrusion apparatus and in order to limit the degradation of the polymer. The feedhopper 1 is empty but is continuously fed preferably in the form of powder. This is gravity fed onto the upper surface of the exposed screw, which continuously pulls material into the screw mixer 2 between the flights 24. The polymer powder is then transported along with the rotating screws. In the extrusion apparatus 2 high shear forces are present and product temperature increases. With the high temperatures, the polymer product melts and is homogenized and mixed, optionally in the presence of additives. The mixing is critical regarding the quality of the end product. The quality of mixing greatly influences the amount of gels presents in the final product. The apparatus 2 is preferably of constant inner diameter and has heavy walls to withstand high pressures. A heating element, e.g. a jacket, is usually used to heat the extruder barrels. The screw in the apparatus 2 is the vehicle upon which the polymer product feed travels. The shape of the screw determines along with the speed at which the screw turns, expressed in rpm, the speed at which the feed moves and the pressure attained in the screw mixer 2.

In a preferred embodiment of the present invention, the screw in the screw mixer is powered by an electric motor 7. This motor may be a motor having variable speed, such that the motor can be used for controlling the speed at which the screw turns during extrusion as well as during purging.

According to a preferred embodiment of the present invention, the extrusion apparatus is also provided with an auxiliary motor 8. This motor 8 is used for emptying the extruder at the end of the extrusion process. According to the present invention, this auxiliary motor 8 is in particular also used to empty the extruder during the purging process of the present extrusion apparatus. The motor 8 drives the extruder at low speed. It enables to have correct melting temperatures at a very reduced purging rate. Instead of using the auxiliary motor, the main motor having an adjustable feed which can work at very low speed, can also be used.

The melted and homogenized polymer product is further pumped and pressurized by a pump 3, preferably powered by an electrical motor 21. The pressure at the end of the screw mixer 2, which generally corresponds to the suction pressure of the pump 3 is controlled by adjusting the speed of the pump 3. In some case the extruder can run without pump, the pressure is then supplied by the screws. The melted polymer product is further filtered by means of a filter 4 to remove impurities and to reduce the amount of gels and is then pushed through a die 6, preferably a die plate 6, provided in a pelletizer 5.

The polymer strands typically are extruded through a die 6 in a series of substantially horizontal, substantially equally spaced apart parallel rows of molten polymer strands. There is no requirement that the molten polymer strands be parallel, although a parallel configuration typically is easier to process downstream. In addition, there is no requirement that the strands be exactly horizontal or exactly equally spaced apart, although again, a horizontal and equally spaced apart arrangement typically is easier to process downstream. The number of strands emerging from the die at the end of the extrusion train is dependent on the polymer melt rate, and on the configuration of the die. The obtained polymer strands are then subsequently directed into a cutting mechanism.

In a preferred embodiment, the cutting apparatus used in the process according to the invention is a pelletizer. Pelletization of polymers using conventional pelletization systems is a well-known method of providing a pellet feedstock. There are many types of conventional pelletizers, depending on the material made, application, rates and user preferences. The most common types of pelletizers fall under the following categories: underwater pelletizers, water ring pelletizers and strand pelletizers. In a preferred embodiment, the cutting apparatus used in the process according to the invention is an underwater pelletizer. In the purging and extrusion process, the molten polyolefin is passed through a die to form a plurality of molten polymer strands. It is preferred that the molten polyolefin is passed through a die specially designed to deliver strands into an underwater pelletizer. Underwater pelletizers are well known in the art and comprise pelletizers wherein the extruded polymer is cut by the rotating pelletizer knives immediately as it emerges from a die. When using an underwater pelletizer, water enters into contact with the die plate and it can freeze up the die holes. Therefore, it is also critical to have all the die holes full of polymer after the purging sequence so that no water enters in the 'polymer side' of the extruder.

Practically, the polymer comes out of the die plate 6 as a large number of noodles which are then delivered into pellet cooling water and cut under water in the pelletizer 5 by rotating knives. The rotational movement of the knives is preferably powered by an electrical motor 22. The particles are cooled down with the water and form the pellets. The die has to be able to withstand the high temperatures and pressures exerted on it from the polymer being forced through it. The polymer adopts the shape of the flow channel of the die. The pressure built up depends upon the properties of the polymer, temperature of the polymer, the shape of the die and the rate through the die. Polymer pellets are further transported by means of conduit 11 to further processing sections, e.g. to a packaging section.

### D. Purging operation

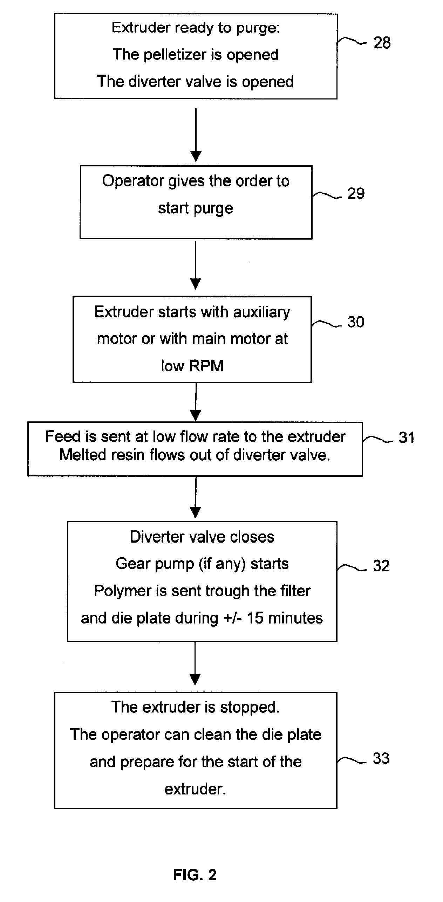

Referring to **Fig. 2****,** the purge operation according to the present invention is typically conducted by carrying out the following steps. The extrusion apparatus is stopped, i.e. the extrusion polymer feed to the extrusion apparatus is stopped and the extrusion apparatus screw is run until the extrusion apparatus seems empty of the extrusion polymer. As indicated in box 28, when the extruder is ready to be purged a diverter (or purge) valve 23 is opened and the polymer is able to exit from the extrusion apparatus barrel 2. The purge valve 23 permits to deliver polymer either into the die or onto a slide, which guides the polymer onto the ground. In a next step an operator gives the order to start purge, as indicated in box 29. In a next box 30, an auxiliary motor is started or the main motor is started at low RPM, and the feed of purging polymer is started. As indicated in box 31, the feed is sent at low flow rate to the extruder. The purging polymer is melted in the extruder and melted polymer resin flows out trough the diverter valve 23. The operation of the screw 24 feeds and compacts the purging polymer as it traverses the length of the extrusion apparatus barrel 2, practically forming a plug flow of the purging polymer as it exits the extrusion apparatus, removing the residual extrusion polymer and contaminants and carrying this along with the exiting purging polymer. A suitable flow rate for flowing out the extruder may comprise a flow rate of 800 kg/hour. In a next box 32, the diverter valve 23 is then closed and a gear pump (if installed) is started. The polymer is forced trough the gear pump 3, filter 4 and die plate 6, for instance during approximately 15 minutes. In a next step, as shown in box 33, the extruder is stopped and an operator can clean the die plate and prepare the extruder for start-up. The pelletizer chamber is closed. According to the present invention, a suitable choice of purging polymer permits the operator to have a lot of time between cleaning and restarting of the extruder.

### E. Extruder Start-up after purging

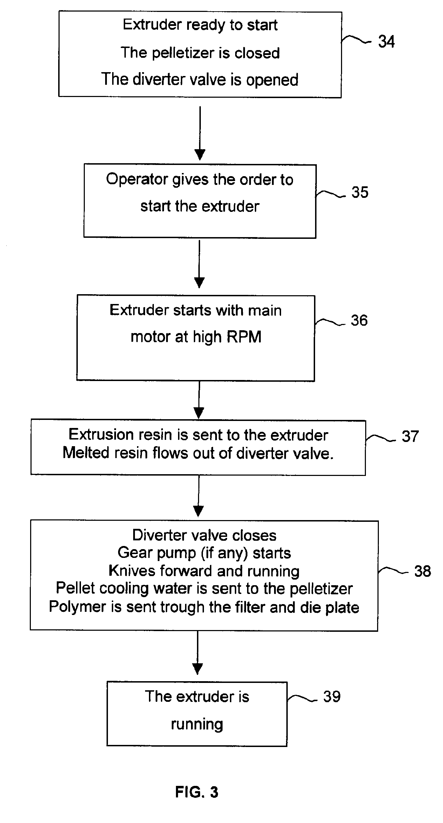

After the purge the extruder is usually restarted. Referring now to **Fig. 3****,** the steps of a start-up sequence are illustrated in a flow chart. In box 34 is ullstrated that when the extruder is ready to be restarted, the palletizer is closed and the diverter valve 23 is opened. The knives are in backward position. In a next box 35, the operator gives the order to start the extruder. In a subsequent box 35, the extruder strats with a main moter, e.g. running at 440 RPM. The main motor is started and the feed is then started at about 60% and preferably about 50% of the nominal capacity. As indicated in next box 37, extrusion resin, e.g. PP with MFI 5 kg, 230°C = 50g/10minutes) is sent at 50% standard rate of e.g. 20 ton/hour. Melted resin flows out of the diverter valve. At the end of the purging sequence the extrusion apparatus only contains residual amounts of purging polymer. In case the purging polymer and the polymer to be extruded in the apparatus are different, these residual amounts of purging polymer need to be removed from the extrusion apparatus before a next extrusion sequence can be started. Therefore, during the first production period (i.e. during the first 5 to 15 minutes) the produced pellets are generally sent to a start-up tank. When the polymer coming out of the diverter valve seems of a suitable quality, then the following steps are started as indicated in box 38: a gear pump 3 is started and diverter valve 23 closed; the knives are pushed forward in order to touch the die plate; a pelletizer 5 is running and pellet cooling water is sent to the pelletizer, polymer is sent through the filter and the die plate. Once the extruder is started as indicated in box 39, the capacity can be increased from 50% or from 60% up to 100% of the nominal capacity of the desired capacity (between 60 and 100 %).

Compared with prior art extruder operational sequences, the present invention provides a safer and easier method for purging the extruder and a safer and easier starting-up an extruder after purging. In the prior art, polymer feed is usually sent to the extruder at 24 tons/hour and polymer flows out of the diverter valve. When the polymer coming out of the diverter valve seems of a suitable quality, then the following steps are preformed: the diverter valve is closed, the gear pump is started and polymer is sent through the filter and the die plate during 1 to 3 minutes. Then the diverter valve opens again and the operator must clean the die plate and close the pelletizer. This is a very difficult operation, since the polymer is very liquid and the operator has not a lot of time. Therefore, three to four operators are required to perform the cleaning task, while molten polymer is still flowing at 24 tons/hour trough the diverter valve during the cleaning operation. After the cleaning, the diverter valve is closed and motlen polymer is sent to the die plate, while water is sent to the pelletizer. However, because the polymer is very liquid (low viscosity) there is a risk that the holes of the die plate are emptied between the cleaning operation of the die plate and the start-up operation of the extruder. Also, the holes of the die plate can be easily frozen while water is sent to the pelletizer which results in a bad granulometry.

From the above-given description it is clear that the present purging method provides many advantages compared to methods applied in the art.

While the invention has been described in terms of the presently preferred embodiment, reasonable variations and modifications are possible by those skilled in the art and such variations are within the scope of the described invention and the appended claims.

## Claims

1. Process for purging an extrusion apparatus, said apparatus comprising a residual amount of an extrusion polyolefin polymer that has been extruded in said apparatus, comprising the steps of
- feeding an effective amount of a purging polymer to said extrusion apparatus,
- substantially reducing the purging flow rate in said extrusion apparatus, said flow rate being the amount of purging polymer that is transported through the extrusion apparatus for purging the apparatus, by reducing the rotation speed of the screw in the extrusion apparatus, and
- removing said residual amount of said extrusion polymer from said extrusion apparatus by displacing said extrusion polymer by means of the purging polymer, thereby obtaining an extrusion apparatus which is substantially free of said extrusion polymer and which comprises a residual amount of said purging polymer.

2. Process according to claim 1, whereby the rotation speed of the screw in the extrusion apparatus during purging is at least 5 times, preferably at least 10 times, preferably at least 20 times lower than the rotation speed of the screw during extrusion.

3. Process according to claims 1 or 2, whereby a motor having an adjustable speed is used for controlling the rotation speed of the screw in the extrusion apparatus.

4. Process according to any of claims 1-3, whereby said purging polymer is fed to said extrusion apparatus at a rate which is lower than the rate for feeding extrusion polymer to said extrusion apparatus.

5. Process according to any of claims 1-4, comprising feeding a purging polymer to said extrusion apparatus which has a melting temperature which is lower than 200°C and preferably lower then 160°C.

6. Process according to any of claims 1-5, whereby said purging polymer is different from said extrusion polymer.

7. Process according to claim 6, whereby said purging polymer has a higher melt strength than said extrusion polymer.

8. Process according to claim 6, whereby said purging polymer has a lower melting temperature than said extrusion polymer.

9. Use of a motor having an adjustable speed for controlling the rotation speed of the screw in the extrusion apparatus during purging.

10. Use of a motor for controlling the rotation speed of the screw in the extrusion apparatus during purging, whereby said motor is different from the motor for controlling the rotation speed of the screw in the extrusion apparatus during extrusion.

11. Use of a purging polymer for purging an extrusion apparatus having a melting temperature below 200°C and preferably below 160°C.

12. Use of a purging polymer according to claim 11 whereby said purging polymer is different from said extrusion polymer.

13. Use according to claim 11 or 12, whereby said purging polymer has a higher melt strength than said extrusion polymer.

14. Use according to claim 11 or 12, whereby said purging polymer has a lower melting point than said extrusion polymer.
